# EUROPÄISCHE PATENTANMELDUNG

(11) **EP 0 828 140 A1**
(43) Veröffentlichungstag der Anmeldung: **11.03.1998**
(21) Anmeldenummer: 97114017.3
(22) Anmeldetag: 14.08.1997
(51) Int. Cl.: G01F 23/00

(54) **Füllstandsensor**

(30) Priorität: 04.09.1996 DE 29615358 U; 30.09.1996 DE 29616988 U; 23.10.1996 DE 19643753
(71) Anmelder: AB Elektronik GmbH, D-59368 Werne (DE)
(72) Erfinder: Fichte, Werner, 01738 Colmnitz (DE)
(74) Vertreter: Hoffmeister, Helmut, Dr. Dipl.-Phys.

(57) **Zusammenfassung**

Um den Füllstand einer in einem Behältnis ihre Menge verändernden Flüssigkeit zu ermitteln, wird eine Einrichtung zur Füllstandsermittlung (Füllstandsensor) vorgeschlagen, der folgende Teile aufweist:
- wenigstens ein einseitig festgelegtes Kraftmeßelement (1) und
- wenigstens einen Auftriebskörper (6), durch den das freie Ende des Kraftmeßelementes (1) kontaktierend mit einer Kraft (Auftrieb A) beaufschlagbar ist.

Zwischen dem Kraftmeßelement (1, 2) und dem Auftriebskörper (6) ist ein auf einer Drehpunktauflage (5') aufliegender Kompensationsstab (3) mit einem Ende angeordnet, wobei am gegenüberliegenden Ende ein Kompensationsgewicht (5) angehängt ist.Das einseitig festgelegte Kraftmeßelement ist ein Piezomeßwertumformer, ein Federwegmeßsystem oder ein Biegekörperelement (2), auf dem eine Sensorstruktur zur Erfassung von Oberflächenspannungen (Widerstandssensor 1) angeordnet ist.

## Beschreibung

Die Erfindung betrifft eine Einrichtung zur Füllstandsermittlung einer in einem Behältnis ihre Menge verändernden Flüssigkeit (Füllstandsensor).

Zur Ermittlung des Füllstandes eines Tanks wird ein Schwimmkörper eingesetzt. Mittels eines daran befestigten Hebels und daran befestigten Schleifers wird ein Widerstandswert abgegriffen, die der jeweiligen Flüssigkeitsmenge entspricht.

Nachteilig ist, daß der Schleifer beim Verändern der Flüssigkeitsmenge ständig über den Widerstand oder eine mit ihm verbundene Kontaktfahne laufen muß. Durch Verschleiß infolge ständiger Belastungen kann es zu Beschädigungen der mechanischen Teile und damit zum Ausfall der Anzeige kommen.

Bekannt ist aus dem DE-Prospekt: Conrad-Katalog (Hirschau), 1996, S. 641, für industrielle Anlagen, Konsumelektronik, Automobiltechnik und biomedizinische Geräte eine Meßübertragungseinrichtung mit einem Relativdrucksensor einzusetzen. Hierfür kann es sich um eine Struktur mit zwei bzw. vier Sensorwiderständen verwendet werden, deren Signal mittels Widerstandsbrückenschaltung elektrisch als Differenzspannung ausgebildet wird. Dabei werden diese Widerstände so plaziert, daß sie im Sinne der Brückenschaltung möglichst eine gegensinnige Verstimmung verursachen.

Es stellt sich demnach die Aufgabe, eine Einrichtung zur Ermittlung eines Füllstandes eines in einem Behältnis ihre Menge veränderden Flüssigkeit (Füllstandsensor) zu schaffen, die einfach im Aufbau und genau in der Meßwerterfassung ist.

Erfindungsgemäß wird diese Aufgabe durch die Merkmale des Anspruchs 1 gelöst.

Die mit der Erfindung erzielten Vorteile bestehen insbesondere darin, daß der Füllstandsensor ohne mechanisch bewegte Kontakte den jeweiligen Füllstand angibt. Um bei Kraftfahrzeugen den jeweiligen aktuellen Füllstand anzeigen zu können, können mehrere Kraftmeßelemente mit der auf ihm befindlichen Sensorstruktur vorgesehen werden. Der Auftriebskörper, der das freie Ende der jeweiligen Kraftmeßelemente mit einer Kraft beaufschlagt, kann hierfür speziell ausgestaltet werden. Es können aber auch mehrere Auftriebskörper zum Einsatz kommen.

Zur Erhöhung der Meßgenauigkeit und zur Vermeidung von Erschütterungseinflüssen kann zwischen dem Auftriebskörper und dem Biegekörperelement ein auf einer Drehpunktauflage aufliegender Kompensationsstab mit seinem freien Ende angeordnet sein. Am gegenüberliegenden Ende ist ein Kompensationsgewicht angehängt.

Einsetzbar sind also sämtliche Kraftmeßelemente, wie induktive, kapazitive Piezomeßwertumformer, Dehnungsmeßstreifen und Federwegmeßsysteme. Das einseitig festgelegte Kraftmeßelement kann ebenfalls ein Biegekörperelement sein, auf dem eine Sensorstruktur zur Erfassung von Oberflächenspannungen angordnet ist.

Immer dann, wenn der Auftriebskörper eine Kraft auf das Biegekörperelement ausübt, kommt es zu Signalsänderungen in der Sensorstruktur zur Erfassung von Oberflächenspannungen. Die Erfassung und die Erzeugung des Füllstandsignals wird "leistungsarm" vorgenommen, so daß es zu keinen Lichtbogen-Erscheinungen bei der Erfassung und Weiterleitung des Signals kommen kann. Aufgrunddessen eignet sich diese Form der Anzeige besonders gut als Kraftstoffanzeige in Fahrzeugtanks.

Die Sensorstruktur kann in der Draufsicht ein polygonal ausgebildetes Widerstandselement sein, an dem kreuzweise vier Elektrodenelemente so angeordnet sind, daß ein Vierpol entsteht, der bei diagonaler Belastung mittels gerichteter Zug-/Druckspannungen senkrecht zum elektrischen Feld zweier gegenüberliegender Elektrodenelemente eine Potentialdifferenz erzeugt.

Hierdurch ist die Sensorstruktur bezüglich ihres Temperaturbeiwertes um eine Größenordnung besser als die bekannten Strukturen. Darüber hinaus ist durch die kleine räumliche Anordnung in der Meßübertragungseinrichtung die Empfindlichkeit auf Temperaturgratienten im Meßelement ebenfalls deutlich geringer. Die Sensorstruktur wird entsprechend gerichtet in dem Hauptbereich mechanischer Spannungen plaziert und ermöglicht so einen recht einfachen Sensoraufbau.

Das Widerstandselement kann als Polygon quadratisch oder rund ausgebildet sein. Hierdurch kann der gewünschte Vierpol auf einfache Art und Weise ausgebildet werden.

Ist das Widerstandselement ein quadratischer Sensorwiderstand, schließen sich an seinen Seiten in den vier Kreuzungsenden vor den Elektrodenelementen Widerstandsstreifenelemente an. Hierdurch ist es möglich, Fertigungstoleranzen weiter zu minimieren.

Bei einem kreisförmigen Sensorwiderstand werden die Elektroden radial jeweils um 90° versetzt angeordnet.

Die sich anschließenden Widerstandsstreifenelemente und die Elektrodenelemente können streifenförmig ausgebildet sein.

Der Sensorwiderstand, die Widerstandsstreifen und die Elektroden-Streifen können im Dickschichtverfahren hergestellt und auf einem Biegeköreprelement aufgebracht sein. Das Biegekröperelement kann eine Dichtschichtkeramik oder ein emaillierter Stahl sein. Die Dicke und die Abmessungen dieses Flächenlements werden von den jeweiligen Einsatz- und Fertigungsbedingungen bestimmt. Hierdurch ist eine Konstellation herstellbar, die an die jeweiligen Einsatzbedingungen einfach anpaßbar ist. Sensorwiderstand, die Widerstandsstreifen und die Elektroden-Streifen können auch in Dünnschichttechnik ausgeführt werden.

Wenigstens diese Konstellation kann mit einem Sensorkopf umschlossen sein. Hierdurch ist eine Abschirmung durch äußere Einflüsse sichergestellt.

Der Auftriebskörper kann in einem mit einem Verschlußstück verschlossenen Schutzrohr untergebracht sein. Das Verschlußstück kann als Sieb ausgebildet sein. Durch diese Unterbringung des Auftriebskörpers ist eine von fremden Einflüssen freie Messung gegeben. Das Sieb übernimmt außer einer Schutz- auch Dämpfungsfunktionen, insbesondere gegen schnell wechselnde Flüssigkeitsstände. Der Durchlaß des Siebes kann hierfür entsprechend eingestellt werden.

Der Gegenstand der Erfindung ist in der Zeichnung dargestellt und wird im folgenden näher beschrieben. Es zeigen:
- Fig. 1a: einen Füllstandsensor;
- Fig. 1b: eine weitere Ausführungsform eines Füllstandsensors;
- Fig. 2: einen Füllstandsensor gemäß Fig. 1a bzw 1b in einem einsatzfähigen Zustand;
- Fig. 3: eine Sensorstruktur zur Erfassung von Oberflächenspannungen von Biegeelementen für einen Füllstandsensor gemäß Fig. 1a bis Fig. 2 und
- Fig. 4: eine Sensorstruktur in einer zweiten Ausführungsform für einen Füllstandsensor gemäß Fig. 1a bis Fig. 2.

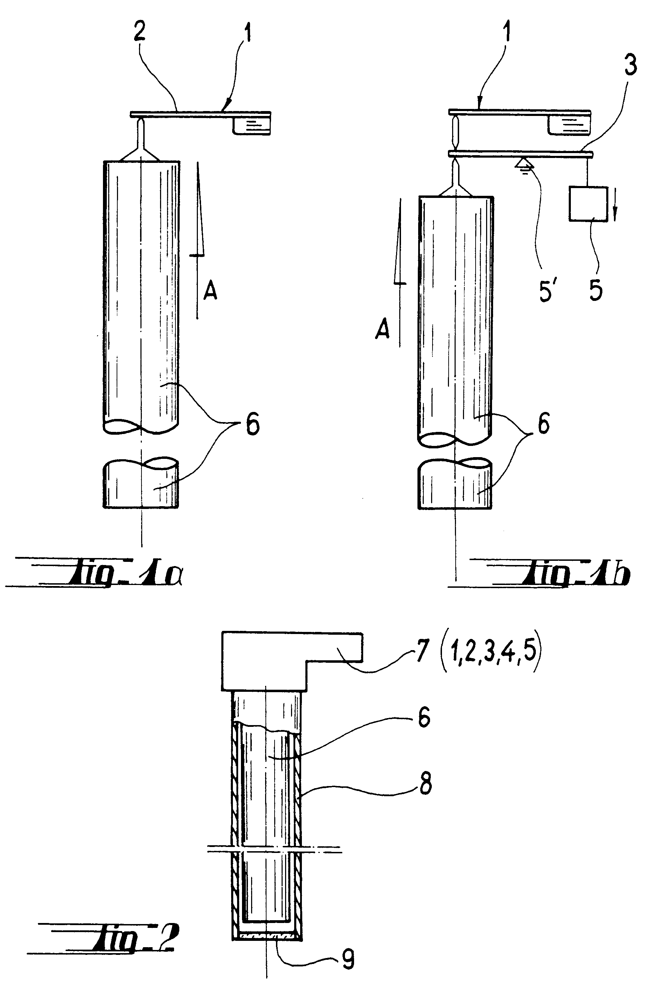

Eine erste Ausführungsform eines Füllstandsensors ist in Fig. 1a dargestellt.

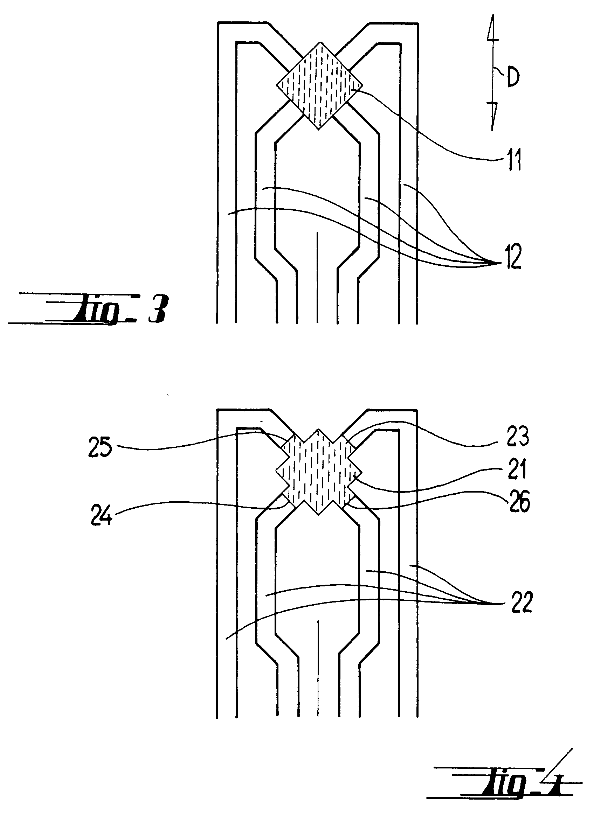

Hierbei ist ein Sensor 1 gemäß Fig. 3 oder 4 auf einem Biegekörperelement 2 angeordnet, die ein Kraftmeßelement ausbilden.

Der Widerstandssensor 1 besteht gemäß Fig. 3 aus einem polygonalem Widerstandselement, das ein quadratisch ausgebildeter Sensorwiderstand 11 ist. Erfindungswesentlich ist, daß an seinen vier Seiten kreuzförmig Elektroden-Streifen 12 angebracht sind. Hierdurch entsteht ein Vierpol. Er wirkt elektrisch wie eine Widerstandsbrücke, bei der bei diagonaler Belastung mittels einer gerichteten Zug-/ Druckspannung D senkrecht zum elektrischen Feld zweier gegenüberliegender Elektroden-Streifen 12 eine Potentialdifferenz erzeugt wird. Diese Potential-Differenz ist annähernd proportional der angewandten Zug-/Druckspannung D und kann über die beiden freien Elektroden-Streifen 12 abgegriffen werden.

In Fig. 4 ist eine zweite Ausführungsform eines Widerstandssensors 1, der nach dem Differenzprinzip arbeitet, dargestellt. Im Unterschied zum Widerstandssensor 1 gemäß Fig. 3 weist das polygonale Widerstandselement einen quadratischen Sensorwiderstand 21 auf, an dessen vier Seiten Widerstandsstreifenstücke 23, 24, 25 und 26 in Richtung seiner Elektroden-Streifen 22 angesetzt. Die Widerstandsstreifenstücke 23, ... 26 und die Elektrodenstreifen 22 haben die gleiche Breite. Die Widerstandsstreifenstücke 22, ... 26 werden gemeinsam mit dem Widerstandssensor 1 hergestellt (gedruckt) und bewirken eine Minimierung der Fertigungstoleranzen.

Die Struktur des Widerstandssensors 1 gemäß Fig. 3 und 4ist bezüglich seines Temperaturbeiwertes um Größenordnungen besser als bekannte Strukturen. Darüber hinaus ist durch seine kleinere räumliche Anordnung die Empfindlichkeit auf Temperaturgradienten in einer Meßübertragungseinrichtung ebenfalls deutlich geringer. Die Sensorstruktur gemäß Fig. 3 und 4 wird entsprechend gerichtet in dem Hauptbereich der mechanischen Zug-/Druckspannungen plaziert und ermöglicht damit einen einfachen Aufbau.

Die Anordnung des Widerstandssensors 1 mit seinem Sensorwiderstand 11, 21, den Widerstandsstreifenstücken 22, ... 26 und den Elektroden-Streifen 12, 22 erfolgt in Dickschichttechnik. Hierbei werden die einzelnen Teile auf dem Biegekörperelement 2 aufgetragen. Das Biegekörperelement 2 ist eine Dickschichtkeramik. Es kann auch ein emaillierter Stahl sein.

Das Biegekörperelement 2 ist einseitig festgespannt. Die Sensorstruktur ist so angeordnet, daß sie sich im Übergangsbereich zwischen fester Einspannung und beweglicher Zunge im Bereich größter Materialspannung befindet. An der gegenüberliegenden freien Seite stößt ein mit einem Auftrieb A beaufschlagter Auftriebskörper 6 an. Anstelle des beschriebenen Kraftmeßelements können alle bekannten Kraftmeßelemente, wie auch Piezomeßwertumformer oder Federwegmeßsysteme eingesetzt werden.

Zur Erhöhung der Meßgenauigkeit ist diese Konfiguration, wie eine zweite Ausführungsform in Fig. 1b zeigt, ergänzt durch einen Kompensationsstab 3, der auf der Spitze des Auftriebskörpers 6 aufliegt. Zwischen dem Kompensationsstab 3 und dem Biegekörperelement 2 ist ein Kompensationszwischenstück 4 angeordnet. Der Kompensationsstab 3 ist ähnlich einer Wippe auf einer Drehauflage 5' gelagert. An seinem freien Ende ist ein Kompensationsgewicht 5 angehängt.
Fig. 2 zeigt einen Füllstandssensor gemäß Fig. 1a bzw. 1b in einem einbaufähigen Zustand.

Hierbei sind wenigstens das Biegekörperelement 2 und der auf ihm im Deckschichtverfahren aufgebrachte Widerstandssensor 1 gemäß Fig. 3 oder 4 von einem Sensorkopf umgeben. Der Sensorkopf 7 schützt diese Teile vor einer Beeinflussung durch äußere Einflüsse und chemische Stoffe.

Der Auftriebskörper 6 ist in einem Schutzrohr 8 untergebracht. Das Schutzrohr 8 ist mit einem Verschlußstück 9, das als Siebkörper oder Gaze zur Erreichung gegebenenfalls einer erforderlichen Dämpfung verschlossen ist.

Wird der Füllstandsensor gemäß Fig. 2 in einem Flüssigkeitsbehältnis insbesondere einem Benzintank, einer Waschmaschine, einer Spülmaschine oder sonstige Flüssigkeitsbehälter eingebaut, wird durch die ansteigende Flüssigkeit der Auftriebskörper 6 in dem Schutzrohr 8 in Richtung Biegekörperelement 2 mit der Kraft eines Auftriebs A gedrückt. Die hierbei auftretende Druckspannung D führt zu einem Verformen des Biegekörperelements 2. Die durch den Auftrieb A ausgeübte Druckspannung D ist an den beiden freien Elektroden-Streifen 12 bzw. 22 als Spannungsgröße abgreifbar und zugleich ein Signal für einen zu erreichenden Füllstand. Dieses Signal kann abgegriffen und angezeigt oder an eine Steuereinheit weitergeleitet werden, um eine Niveauanzeige abzuleiten oder Steuerungsvorgänge einzuleiten.

Ist in einem Behältnis der Füllstand nicht an nur einer Stelle gesamt erfaßbar, sind mehrere Biegekörperelemente 2 mit dem Widerstandssensor 1 vorzusehen. Ihr Beaufschlagen mit einer Kraft, die dem jeweiligen Füllstand entspricht, kann ein Auftriebskörper oder mehrere Auftriebskörper realisieren. Läßt es die Behältergeometrie zu, wird ein Biegekörperelement 2 mit dem Widerstandssensor 1 und ein Antriebskörper 6 eingesetzt.

## Patentansprüche

1. Einrichtung zur Füllstandsermittlung einer in einem Behältnis ihre Menge verändernden Flüssigkeit (Füllstandsensor), die aufweist:
- wenigstens ein einseitig festgelegtes Kraftmeßelement (1, 2) und
- wenigstens einen Auftriebskörper (6), durch den das freie Ende des Kraftmeßelementes (1, 2) kontaktierend mit einer Kraft (Auftrieb A) beaufschlagbar ist.

2. Einrichtung nach Anspruch 1, dadurch gekennzeichnet, daß zwischen dem Kraftmeßelement (1, 2) und dem Auftriebskörper (6) ein auf einer Drehpunktauflage (5') aufliegender Kcmpensationsstab (3) mit einem Ende angeordnet ist, wobei am gegenüberliegenden Ende ein Kompensationsgewicht (5) angehängt ist.

3. Einrichtung nach Anspruch 1 oder 2, dadurch gekennzeichnet, daß das einseitig festgelegte Kraftmeßelement ein Piezomeßwertumformer, ein Federwegmeßsystem oder ein Biegekörperelement (2) ist, auf dem eine Sensorstruktur zur Erfassung von Oberflächenspannungen (Widerstandssensor 1) angeordnet ist.

4. Einrichtung nach Anspruch 1 bis 3, dadurch gekennzeichnet, daß die Sensorstruktur (1) ein in der Draufsicht diagonal ausgebildetes Widerstandselement (11; 21, 23, 24, 25, 26) aufweist, an dem kreuzweise vier Elektrodenelemente (12; 22) so angeordnet sind, daß ein Vierpol entsteht, der bei diagonaler Belastung mittels gerichteter Zug-/Druckspannungen (D) senkrecht zum elektrischen Feld zweier gegenüberliegender Elektrodenelemente (12; 22) eine Potentialdifferenz erzeugt.

5. Einrichtung nach einem der Ansprüche 1 bis 4, dadurch gekennzeichnet, daß das Widerstandselement ein quadratisch oder rund ausgebildeter Sensorwiderstand (11) ist.

6. Einrichtung nach einem der Ansprüche 1 bis 5, dadurch gekennzeichnet, daß das Widerstandselement ein quadratisch ausgebildeter Sensorwiderstand (21) ist, der sich an seinen vier Seiten in den Kreuzungsenden der Elektrodenelemente (22) in je einem Widerstandsstreifenelement (23, 24, 25, 26) fortsetzt.

7. Einrichtung nach einem der Ansprüche 1 bis 6, da durch gekennzeichnet, daß die Widerstandsstreifen (23, ... 26) und die Elektrodenelemente (12; 22) streifenförmig ausgebildet sind.

8. Einrichtung nach einem der Ansprüche 1 bis 7, dadurch gekennzeichnet, daß der Sensorwiderstand (11; 21), die Widerstandsstreifen (23, ... 26) und die Elektroden-Streifen (12; 22) im Dickschichtverfahren hergestellt und auf dem Biegekörperelement (2), aufgebracht sind.

9. Einrichtung nach einem der Ansprüche 1 bis 8, dadurch gekennzeichnet, daß das Biegekörperelement (2) eine Dichtschichtkeramik oder ein emaillierter Stahl ist.

10. Einrichtung nach einem der Ansprüche 1 bis 9, da durch gekennzeichnet, daß wenigstens das Kraftmeßelement (2) und der auf ihm angeordnete Sensorwiderstand (11; 21) mit wenigstens den Elektroden-Streifen (12; 22) von einem Sensorkopf (7) umschlossen sind.

11. Einrichtung nach einem der Ansprüche 1 bis 10, dadurch gekennzeichnet, daß der Auftriebskörper (6) in einem mit einem Verschlußstück (9) verschlossenen Schutzrohr (8) untergebracht ist.
